# NEUE EUROPÄISCHE PATENTSCHRIFT

(11) **EP 2 152 647 B2**
(45) Veröffentlichungstag und Bekanntmachung des Hinweises auf die Entscheidung über den Einspruch: **02.12.2015**
(45) Hinweis auf die Patenterteilung: 09.05.2012
(21) Anmeldenummer: 08750301.7
(22) Anmeldetag: 15.05.2008
(51) Int. Cl.: C04B 40/00, C04B 28/02, C04B 24/26

(54) **WÄSSRIGE ZUBEREITUNGEN POLYMERMODIFIZIERTER ABBINDEBESCHLEUNIGER UND DEREN EINSATZ IM BAUBEREICH**
AQUEOUS PREPARATIONS OF POLYMER-MODIFIED SETTING ACCELERATORS, AND USE THEREOF IN THE CONSTRUCTION INDUSTRY
PRÉPARATIONS AQUEUSES D'ACCÉLÉRATEURS DE PRISE MODIFIÉS PAR DES POLYMÈRES ET LEUR UTILISATION DANS LE DOMAINE DE LA CONSTRUCTION

(30) Priorität: 30.05.2007 DE 102007024965
(43) Veröffentlichungstag der Anmeldung: 17.02.2010
(73) Patentinhaber: Wacker Chemie AG, 81737 München (DE)
(72) Erfinder: BONIN, Klaus, 84489 Deutschland (DE); ZEH, Harald, 84489 Burghausen (DE)
(74) Vertreter: Schuderer, Michael
(86) Internationale Anmeldenummer: PCT/EP2008/055958
(87) Internationale Veröffentlichungsnummer: WO 2008/145531

(56) Entgegenhaltungen:
- EP-A- 0 812 812
- WO-A1-00/05275
- WO-A1-00/05276
- WO-A1-2007/093551
- DE-A1- 2 011 150
- DE-A1- 2 548 688
- JP-A- S57 166 351
- JP-A- 2006 045 010
- US-A- 3 931 096
- Römpp Chemie Lexikon, "Schutzkolloide"
- Concrete Admixtures and the Environment; Dt. Bauchemie, 2011
- Römpp Chemie Lexikon, "Beton"
- Römpp Chemie Lexikon, "Betonzusatzmittel"

## Beschreibung

Die Erfindung betrifft wässrige Zubereitungen polymermodifizierter Abbindebeschleuniger, Verfahren zu deren Herstellung sowie wässrige Betonzusammensetzungen enthaltend wässrige Zubereitungen der polymermodifizierten Abbindebeschleuniger, Verfahren zu deren Herstellung und deren Verwendung beispielsweise im Konstruktionsbau, Minenbau oder Tunnelbau.

Ein gängiges Verfahren zum Herstellen und Verarbeiten von wässrigen Betonmassen ist das Trockenspritzbetonverfahren, bei dem das Anmachen von Betontrockenmischungen mit Wasser direkt auf der Baustelle erfolgt. Beim Trockenspritzbetonverfahren wird die Betontrockenmischung in einer Förderleitung beispielsweise pneumatisch einer Spritzdüse zugeführt und in der Spritzdüse mit Wasser angemacht sowie gegebenenfalls mit weiteren Additiven vermischt. Die Betonmassen werden also unmittelbar nach dem Anmachen mit Wasser mit der Spritzdüse auf einen Untergrund gespritzt. Betontrockenmischungen enthalten Zement, Füllstoffe wie Sand oder Kies und gegebenenfalls Abbindebeschleuniger und Polymerisate sowie weitere Additive. Durch Zusatz von Polymerisaten kann die Verarbeitbarkeit von Betonmassen oder das Eigenschaftsprofil von Beton verbessert werden, wie beispielsweise dessen Haftung auf verschiedenen Untergründen, Gasdurchlässigkeit, E-Modul, oder es kann auch eine Hydrophobierung des Betons erreicht werden. Abbindebeschleuniger, wie beispielsweise Aluminiumsulfat, beschleunigen das Erhärten wässriger Betonmassen erheblich und bewirken dadurch ein verbessertes Standvermögen der wässrigen Betonmassen auf ihrem Untergrund. Dadurch wird die Verarbeitung von wässrigen Betonmassen vereinfacht und eine vertikale- bzw. Überkopfverarbeitung ermöglicht. Je nach Bedarf können durch entsprechenden Einsatz von Abbindebeschleunigern Ansteifzeiten von mehreren Minuten bis zu wenigen Sekunden eingestellt werden.

Das Trockenspritzbetonverfahren eignet sich insbesondere bei Einsatz kleinerer Mengen von Betonmassen, wie es beispielsweise bei der Sanierung von Bauwerken häufig der Fall ist.

Ein grundlegendes Problem besteht allerdings darin, dass bei unterschiedlichen Bauabschnitten derselben Baustelle häufig wässrige Betonmassen mit unterschiedlichen Gehalten an Abbindeschleunigern und Polymerisaten benötigt werden. Die erforderliche Anpassung der Zusammensetzung der wässrigen Betonmassen ist bisher jedoch auf keine praktikable und ökonomische Weise möglich. Bisher bekannte Zusammensetzungen enthaltend Abbindebeschleuniger und Polymerisate sind nur in trockener Form lagerstabil. Bei Zugabe von Polymerisaten oder Abbindebeschleunigern zu einer Betontrockenmischung müsste aber die gesamte Betontrockenmischung gemischt werden, was mit einem hohen zeitlichen, apparativen und logistischen Aufwand verbunden wäre. Effizienter wäre es, Abbindeschleuniger und Polymerisate dem Wasser beizumischen, mit dem die Betontrockenmischungen in der Spritzdüse angemacht werden. Dies ist aber nicht möglich, da bisher bekannte Abbindeschleuniger und Polymerisate in wässriger Form sofort koagulieren und ausflocken und deswegen unmittelbar nach ihrer Mischung ohne einen weiteren Zwischenschritt appliziert werden müssen; d.h. das Mischen von Abbindeschleunigern und Polymerisaten konnte bisher nur in den wässrigen Betonmassen erfolgen und dies wiederum nur unmittelbar vor deren Auftragung auf einen Untergrund.

Insgesamt ist das Trockenspritzbetonverfahren also wenig flexibel hinsichtlich der Herstellung von wässrigen Betonmassen mit variablen Mengen an Abbindeschleunigern und Polymerisaten. Darüber hinaus tritt bei der Handhabung von Betontrockenmischungen eine hohe Staubentwicklung auf, die die Gesundheit der Arbeiter auf der Baustelle belastet und aufwändige Sicherheitsvorkehrungen erforderlich machen.

Sehr gebräuchlich ist auch der Einsatz von Nassbetonmischungen insbesondere unter Anwendung des Nassspritzbetonverfahrens. Nassbetonmischungen enthalten Zement, Füllstoffe wie Sand oder Kies und gegebenenfalls Polymerisate und weitere Additive und sind bereits mit Wasser angemacht. Beim Nassspritzbetonverfahren werden Abbindebeschleuniger den Nassbetonmischungen in der Spritzdüse, d.h. unmittelbar vor dem Auftragen auf den jeweiligen Untergrund zugesetzt. Von Vorteil ist, dass bei Einsatz des Nassspritzbetonverfahrens der Wassergehalt, die Konsistenz und damit die Qualität des Nassspritzbetons genau einstellbar sind. Das Nassspritzbetonverfahren eignet sich insbesondere bei Anwendung größerer Mengen an Betonmassen, wie es beispielsweise beim Tunnelbau der Fall ist.

Allerdings ist auch das Nassspritzbetonverfahren mit dem Nachteil verbunden, dass die Menge an Polymerisaten in den Nassbetonmischungen auf der Baustelle nicht ohne einen weiteren, aufwändigen Mischungsschritt variiert werden kann. Denn auf Zugabe von Polymerisaten zu einer Nassbetonmischung müsste die gesamte Nassbetonmischung gemischt werden, was in Anbetracht der großen zu verarbeitenden Mengen an wässrigen Betonmassen mit erheblichem zeitlichen und apparativen Aufwand verbunden wäre und zudem einen erheblichen Eingriff in die etablierte Baustellenlogistik darstellen würde.

Vor diesem Hintergrund bestand die Aufgabe, Zusammensetzungen und Verfahren zur Verfügung zu stellen, mit denen Abbindebeschleuniger und Polymerisate den wässrigen Betonmassen auf der Baustelle in flexibler und ökonomischer Weise beliebig zudosiert werden können.

Es wurde überraschend gefunden, dass wässrige Zusammensetzungen enthaltend Abbindebeschleuniger und kationisch stabilisierte Polymerisate stabil sind und nicht koagulieren oder ausfallen.

Gegenstand der Erfindung sind wässrige Zubereitungen polymermodifizierter Abbindebeschleuniger, dadurch gekennzeichnet, dass ein oder mehrere Abbindebeschleuniger ausgewählt aus der Gruppe umfassend Aluminiumverbindungen, Silikate, Alkalihydroxide und Alkalicarbonate und ein oder mehrere kationisch stabilisierte Polymerisate, die ein oder mehrere Polymerisate auf Basis ethylenisch ungesättigter Monomere und ein oder mehrere Polymere mit kationischer Ladung als kationische Schutzkolloide enthalten, enthalten sind.

Bevorzugte Abbindebeschleuniger sind Aluminiumsalze, Aluminate, Alkalisilikate, wie beispielsweise Wasserglas, Alkalicarbonate oder Kaliumhydroxid. Besonders bevorzugte Abbindebeschleuniger sind Aluminiumsulfat, Alkalialuminate wie Kaliumaluminat, Aluminiumhydroxide, Kaliumcarbonat oder Sulfoaluminate wie beispielsweise Calciumsulfoaluminat.

Kationisch stabilisierte Polymerisate enthalten ein oder mehrere Polymere mit kationischer Ladung als kationische Schutzkolloide (kationische Schutzkolloide), ein oder mehrere Polymerisate auf Basis ethylenisch ungesättigter Monomere (Basispolymerisat) sowie gegebenenfalls nichtionische Schutzkolloide und/oder nichtionische Emulgatoren.

Geeignete kationische Schutzkolloide sind Polymere mit kationischer Ladung. Solcher Polymere sind beispielsweise in E.W. Flick, Water-Soluble Resins - an Industrial Guide, Noyes Publications, Park Ridge, N.J., 1991 beschrieben. Bevorzugt werden Polymere, welche kationische Monomereinheiten enthalten, besonders bevorzugt Monomereinheiten mit quarternären Ammoniumgruppen, Sulfoniumgruppen und Phosphoniumgruppen. Am meisten bevorzugt werden Homo- oder Mischpolymerisate von einem oder mehreren kationischen Monomeren aus der Gruppe umfassend Diallyldimethylammoniumchlorid (DADMAC), Diallyldiethylammoniumchlorid (DADEAC), (3-Methacryloxy)propyltrimethylammoniumchlorid (MPTAC),(3-Methacryloxy)-ethyltrimethylammoniumchlorid (METAC), (3-Methacrylamido)propyltrimethyl-ammoniumchlorid (MAPTAC), 2-Dimethylaminoethylmethacrylat oder 3-Dimethylaminopropylmethacrylamid (DMAEMA oder DMAPMA bei pH ≤ 5 protonierte Spezies).

Im allgemeinen enthalten die kationischen Schutzkolloide 20 bis 100 Gew.-%, vorzugsweise 50 bis 100 Gew.-%, besonders bevorzugt 100 Gew.-%, kationische Monomereinheiten, bezogen auf das Gesamtgewicht des kationischen Schutzkolloids. Geeignete nichtionische, copolymerisierbare Monomere sind Vinylester mit 1 bis 15 C-Atomen im Carbonsäurerest, wie Vinylacetat, Vinylpropionat, Vinyldodecanoat; Acrylamid, Hydroxyethyl(meth)-acrylat, Hydroxypropyl(meth)acrylat, Ester der Methacrylsäure und Acrylsäure mit Alkoholen mit 4 bis 13 C-Atomen, Polyalkylenglykol-(meth)acrylate mit C₂- bis C₄-Alkyleneinheiten und Molekulargewichten von 350 bis 2000 g/mol, sowie N-Vinylpyrrolidon, N-Vinylcaprolactam, Acryloxypropyltrialkoxy- und Methacryloxypropyltrialkoxysilane, Vinyltrialkoxysilane und Vinylmethyldialkoxysilane und/oder Mischungen der genannten nichtionischen Comonomere.

Bevorzugt werden kationische Schutzkolloide mit einem K-Wert (Bestimmung in Anlehnung an DIN 53726, 1 Gew.-% in Wasser, 25°C, Ubbelohde-Viskosimeter) von 10 bis 250, besonders bevorzugt 25 bis 130. Die Änderung zur DIN 53726, der Norm für die Bestimmung der Viskosität von PVC im Ubbelohde Viskosimeter, besteht darin, dass als Lösungsmittel anstatt Cyclohexanon Wasser eingesetzt wird. Die Höppler-Viskosität der kationischen Schutzkolloide beträgt 1 bis 50 mPas, vorzugsweise 1 bis 25 mPas, am meisten bevorzugt 1 bis 15 mPas (jeweils Bestimmung mit der Methode nach Höppler bei 20°C gemäß DIN 53015).

Die Herstellung von kationischen Schutzkolloiden ist beispielsweise aus DE-A 102006007282 bekannt und kann beispielsweise durch freie radikalische Polymerisation in wässriger Lösung, in Lösungsmittelgemischen oder in Gegenwart von Salzen, beispielsweise auch in Fällungspolymerisation, beispielsweise durch polymeranaloge Reaktion in Lösung oder Lösungsmittelgemischen, beispielsweise in Suspension oder beispielsweise durch inverse Emulsionspolymerisation erfolgen.

Für die Herstellung des Basispolymerisat geeignete Monomere sind Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene oder Vinylhalogenide.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 13 C-Atomen, beispielsweise VeoVa9® oder VeoVa10® (Handelsnamen der Firma Shell). Besonders bevorzugt ist Vinylacetat. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat. Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0,05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri-(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat. Weitere geeignete Comonomere sind Vinylalkylether, wie beispielsweise Vinylmethylether, Vinylethylether, Vinylisobutylether, Vinyloctadecylether.

Beispiele für als Basispolymerisat geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 15 C-Atomen im Carbonsäurerest wie Vinylpropionat, Vinyldodecanoat, Vinylester von alpha-verzweigten Carbonsäuren mit 9 bis 13 C-Atomen wie VeoVa9®, VeoVa10®, VeoVa11®;
Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und
Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten;
Mischpolymerisate mit Vinylacetat, 1 bis 40 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen;
Styrol-(Meth)acrylsäureester-Copolymerisate mit einem oder mehreren Monomeren aus der Gruppe Methylacrylat, Ethylacrylat, Propylacrylat, n-Butylacrylat, 2-Ethylhexylacrylat;
Vinylacetat-(Meth)acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen;
Styrol-1,3-Butadien-Copolymerisate;
wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +10°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Basispolymerisate erfolgt in wässrigem Medium und bevorzugt nach dem Emulsionspolymerisationsverfahren - wie beispielsweise in DE-A 102006007282 beschrieben. Die Basispolymerisate fallen dabei in Form von wässrigen Dispersionen an und können nach gängigen Trocknungsverfahren zu entsprechenden in Wasser redispergierbaren Pulver überführt werden.

Die Herstellung von in Wasser redispergierbaren, kationisch stabilisierten Polymerisaten erfolgt wie beispielsweise aus DE-A 102006007282 bekannt, indem wässrige Dispersionen des Basispolymerisats getrocknet werden, wobei die kationischen Schutzkolloide vor, während oder nach der Trocknung zugegeben werden können. Die kationischen Schutzkolloide können dabei auch in Kombination mit nichtionischen Schutzkolloiden oder in Kombination mit nichtionischen Emulgatoren eingesetzt werden. Geeignete nichtionische Schutzkolloide sind beispielsweise Polyvinylalkohole, Polyvinylacetale, Polyvinylpyrrolidone, Polysaccharide in wasserlöslicher Form wie Stärken (Amylose und Amylopectin), Cellulosen und deren Methyl-, Hydroxyethyl-, Hydroxypropyl-Derivate, Poly(meth)acrylamid. Geeignete nichtionische Emulgatoren sind beispielsweise Tenside wie Alkylpolyglykolether oder Alkylarylpolyglykolether mit 8 bis 40 Alkylenoxid-Einheiten.

Zur Herstellung von in Wasser dispergierten, kationisch stabilisierten Polymerisaten können beispielsweise wässrige Dispersionen von Basispolymerisaten mit kationischen Schutzkolloiden gemischt werden. In Wasser dispergierte, kationisch stabilisierte Polymerisate sind auch erhältlich, indem in Wasser redispergierbare, kationisch stabilisierte Polymerisate mit Wasser redispergiert werden.

Das kationisch stabilisierte Polymerisat enthält das kationische Schutzkolloid, gegebenenfalls in Kombination mit nichtionischem Schutzkolloid und/oder nichtionischem Emulgator, in einer Menge von insgesamt 0,1 bis 20 Gew.-%, bevorzugt von 1 bis 12 Gew.-%, jeweils bezogen auf die polymeren Bestandteile der kationisch stabilisierten Polymerisate. Kationisch stabilisierte Polymerisate in Form von wässrigen Dispersionen haben einen Feststoffgehalt von vorzugsweise von 10 bis 75 Gew.-%, besonders bevorzugt von 40 bis 60 Gew.-%.

Ein weiterer Gegenstand der Erfindung ist ein Verfahren zur Herstellung der wässrigen Zubereitungen der polymermodifizierten Abbindebeschleuniger, dadurch gekennzeichnet, dass ein oder mehrere Abbindebeschleuniger ausgewählt aus der Gruppe umfassend Aluminiumverbindungen, Silikate, Alkalihydroxide und Alkalicarbonate und ein oder mehrere kationisch stabilisierte Polymerisate, die ein oder mehrere Polymerisate auf Basis ethylenisch ungesättigter Monomere und ein oder mehrere Polymere mit kationischer Ladung als kationische Schutzkolloide enthalten, in Gegenwart von Wasser gemischt werden.

Für die Herstellung der wässrigen Zubereitungen der polymermodifizierten Abbindebeschleuniger können die Abbindebeschleuniger in beliebiger Form eingesetzt werden; d.h. die Abbindebeschleuniger können beispielsweise in fester oder flüssiger Form oder als wässrige Lösung, wässrige Emulsion oder wässrige Dispersion eingesetzt werden. Die kationisch stabilisierten Polymerisate werden als wässrige Dispersionen oder als pulverförmige Polymerisate eingesetzt.

Die Herstellung der wässrigen Zubereitungen der polymermodifizierten Abbindebeschleuniger kann beispielsweise erfolgen, indem pulverförmige kationisch stabilisierte Polymerisate in wässrigen Zubereitungen von Abbindebeschleunigern, wie beispielsweise Dispersionen oder Lösungen, dispergiert werden. Ebenso können pulverförmige kationisch stabilisierte Polymerisate mit pulverförmigen Abbindebeschleunigern gemischt werden, wobei trockene Mischungen erhalten werden, die zu einem späteren Zeitpunkt mit Wasser zu den wässrigen Zubereitungen der polymermodifizierten Abbindebeschleuniger umgesetzt werden. Vorzugsweise werden wässrige Zubereitungen der polymermodifizierten Abbindebeschleuniger hergestellt, indem wässrige Dispersionen von kationisch stabilisierten Polymerisaten mit Abbindebeschleunigern gemischt werden und gegebenenfalls zu Pulvern getrocknet werden, die zu einem späteren Zeitpunkt, beispielsweise auf der Baustelle, wieder mit Wasser gemischt werden.

Der Gehalt der Abbindebeschleuniger und kationisch stabilisierten Polymerisaten an den wässrigen Zubereitungen der polymermodifizierten Abbindebeschleunigern beträgt vorzugsweise 10 bis 75 Gew.-%, besonders bevorzugt 30 bis 65 Gew.-% und am meisten bevorzugt 40 bis 60 Gew.-%, bezogen auf das Gesamtgewicht der wässrigen Zubereitungen der polymermodifizierten Abbindebeschleuniger.

Die Abbindebeschleuniger und die kationisch stabilisierten Polymerisate können in den wässrigen Zubereitungen der polymermodifizierten Abbindebeschleuniger in beliebigen Verhältnissen vorliegen. Vorzugsweise beträgt das Gewichtsverhältnis von kationisch stabilisierten Polymerisaten zu Abbindebeschleunigern von 5 zu 1 bis 1 zu 5, besonders bevorzugt von 2 zu 1 bis 1 zu 2 und am meisten bevorzugt 1 zu 1, jeweils bezogen auf das Trockengewicht der wässrigen Zubereitungen der polymermodifizierten Abbindebeschleuniger. Die wässrigen Zubereitungen von polymermodifizierten Abbindebeschleunigern zeichnen sich dadurch aus, dass sie in beliebigen Abmischungsverhältnissen auch nach Tagen und Wochen stabil sind und nicht koagulieren oder ausfallen.

Die wässrigen Zubereitungen der polymermodifizierten Abbindebeschleuniger eignen sich zur Anwendung in hydraulisch abbindenden Systemen, wie beispielsweise in Beton, Mörteln, wie beispielsweise in Estrichen oder Putzen, sowie Farben. Bevorzugtes Einsatzgebiet für die wässrigen Zubereitungen der polymermodifizierten Abbindebeschleuniger ist die Anwendung in Beton nach dem Trockenspritzbetonverfahren und das Nassspritzbetonverfahren.

Ein weiterer Gegenstand der Erfindung sind wässrige Betonzusammensetzungen enthaltend Zement, Füllstoffe sowie gegebenenfalls weitere Zusatzmittel oder Additive, dadurch gekennzeichnet, dass eine wässrige Zubereitung der polymermodifizierten Abbindebeschleuniger enthaltend ein oder mehrere Abbindebeschleuniger ausgewählt aus der Gruppe umfassend Aluminiumverbindungen, Alkalisilikate, Alkalihydroxide und Alkalicarbonate und ein oder mehrere kationisch stabilisierte Polymerisate, die ein oder mehrere Polymerisate auf Basis ethylenisch ungesättigter Monomere und ein oder mehrere Polymere mit kationischer Ladung als kationische Schutzkolloide enthalten, enthalten ist.

Typische Rezepturen für die wässrigen Betonzusammensetzungen enthalten 9 bis 30 Gew.-%, insbesondere 15 bis 25 Gew.-% Zement, wie beispielsweise Portlandzement oder Hochofenzement, bevorzugt Portlandzement CEM I 42,5, Portlandzement CEM I 52,5, Portlandsilicastaubzement CEM II A-D 52,5 oder Hochofenzement CEM III 42,5 A. Abbindebeschleuniger werden zu 3 bis 8 Gew.-%, bezogen auf den Zementgehalt der wässrigen Betonzusammensetzung, eingesetzt. Vorzugsweise werden wässrige Abbindebeschleuniger eingesetzt, vorzugsweise mit einem Feststoffgehalt von 10 bis 75 Gew.-%, besonders bevorzugt von 30 bis 60 Gew.-% und am meisten bevorzugt von 40 bis 60 Gew.-%. Kationisch stabilisierte Polymerisate werden zu 0,1 bis 5,0 Gew.-%, bevorzugt zu 0,2 bis 2,0 Gew.-%, besonders bevorzugt von 0,5 bis 1,5 Gew.-% eingesetzt, wobei die kationisch stabilisierten Polymerisate vorzugsweise in Form von in Wasser dispergierten, kationisch stabilisierten Polymerisaten mit einem Feststoffgehalt von 10 bis 75 Gew.-%, besonders bevorzugt von 40 bis 60 Gew.-% vorliegen. Ein weiterer Bestandteil sind 65 bis 90 Gew.-%, bevorzugt 75 bis 90 Gew.-% Füllstoffe wie Sand oder Kies. Soweit nicht anders angegeben beziehen sich die Angaben in Gew.-% jeweils auf 100 Gew.-% Trockenmasse der Rezeptur. Zur Herstellung der wässrigen Betonzusammensetzungen werden 20 bis 60 Gew.-%, vorzugsweise 25 bis 40 Gew.-% Wasser, bezogen auf die Gesamtmenge des eingesetzten Zements, eingesetzt.

Die anwendungstechnischen Eigenschaften der wässerigen Betonzusammensetzungen können durch weitere Zusatzmittel verbessert werden. In bevorzugten Ausführungsformen der wässrigen Betonzusammensetzungen enthaltene Zusatzmittel sind beispielsweise Pigmente, Schaumstabilisatoren, Hydrophobierungsmittel, Weichmacher, Flugasche, disperse Kieselsäure, Fließmittel, Luftporenmittel zur Steuerung der Betonrohdichte oder Pumpenhilfsmittel zur Verbesserung der Pumpbarkeit. Des Weiteren können den wässrigen Betonzusammensetzungen gegebenenfalls Additive zugesetzt werden, die den abbindebeschleunigenden Effekt der Abbindebeschleuniger auf die wässrigen Betonmassen modulieren, wie beispielsweise Phosphorsäure, Phosphonsäuren, Polyphosphat, Polyhydroxycarbonsäure oder organische Additive, insbesondere Polyacrylsäure, Hexamethylentetraamin, Alkanolamine wie beispielsweise Diethanolamin (DEA) oder Triethanolamin.

Ein weiterer Gegenstand der Erfindung ist ein Verfahren zur Herstellung der wässrigen Betonzusammensetzung durch Mischen von Zement, Füllstoffen und gegebenenfalls weiteren Zusatzmitteln oder Additiven, dadurch gekennzeichnet, dass mindestens eine wässrige Zubereitung der polymermodifizierten Abbindebeschleuniger wie definiert in Anspruch 10 zugesetzt wird.

Die wässrigen Betonzusammensetzungen können beispielsweise aus Betontrockenmischungen oder Nassbetonmischungen hergestellt werden. Das Mischen der Bestandteile der Rezeptur zur Herstellung der wässrigen Betonzusammensetzungen ist an keine besondere Mischvorrichtung oder Vorgehensweise gebunden und kann beispielsweise in einem Betonmischer oder einem Fertigbetonmischwerk erfolgen.

Im bevorzugten Verfahren zur Herstellung der wässrigen Betonzusammensetzung werden die wässrigen Zubereitungen der polymermodifizierten Abbindebeschleuniger im Nassspritzbetonverfahren oder im Trockenspritzbetonverfahren in der Spritzdüse mit den weiteren Komponenten der wässrigen Betonzusammensetzung gemischt. Besonders bevorzugt ist die Anwendung im Nassspritzbetonverfahren. Es können die für Spritzbetonverfahren bekannten Vorrichtungen wie beispielsweise Spritzroboter oder Spritzmaschinen eingesetzt werden.

Vorteilhafterweise werden bei Anwendung des erfindungsgemäßen Verfahrens die wässrigen Zubereitungen der polymermodifizierten Abbindebeschleuniger direkt an die Baustelle angeliefert, so dass kein zeitaufwändiges Dispergieren bzw. Auflösen und Mischen der Abbindebeschleuniger und kationisch stabilisierten Polymerisaten an der Baustelle durchgeführt werden muss. Zudem kann das Mischen der wässrigen Zubereitungen der polymermodifizierten Abbindebeschleuniger mit den weiteren Komponenten der wässrigen Betonzusammensetzung nach dem Nassspritzbetonverfahren oder dem Trockenspritzbetonverfahren mit gängigen Vorrichtungen und der etablierten Baustellenlogistik durchgeführt werden. Bei der erfindungsgemäßen Vorgehensweise kann für das gesamte Bauvorhaben eine Betonmischung mit gleichbleibender Zusammensetzung enthaltend Zement, Füllstoffe und gegebenenfalls weitere Zusatzmittel und Additive verwendet werden, der beim Verarbeiten auf der Baustelle entsprechend den jeweiligen Erfordernissen eines jeden Bauabschnitts kationisch stabilisierte Polymerisate und Abbindebeschleuniger in der jeweils erforderlichen Menge zugesetzt werden.

Die erfindungsgemäßen wässrigen Betonzusammensetzungen haben gegenüber herkömmlichen Betonzusammensetzungen auch vorteilhafte anwendungstechnische Eigenschaften. So weisen die wässrigen Betonzusammensetzungen insbesondere schon nach kurzer Abbindezeit (1 bis 2 Tage) eine erhöhte Druckfestigkeit gegenüber herkömmlichen Betonzusammensetzungen auf.

Ein weiterer Gegenstand der vorliegenden Erfindung ist ein Verfahren zur Herstellung eines Betonverbundes, dadurch gekennzeichnet, dass eine oder mehrere Schichten der wässrigen Betonzusammensetzungen übereinander aufgebracht werden, wobei gegebenenfalls zwischen oder in den Schichten Bauelemente eingebaut werden können.

Geeignete Bauelemente sind beispielsweise Stahl, wasserundurchlässige Folien, vorzugsweise PE- oder PVC-haltige Folien, oder wasserundurchlässige Membrane. Wasserundurchlässige Membrane enthalten Polymere und zementäre Komponenten und sind dem Fachmann auch unter dem Begriff TSL (thin sprayable liner) bekannt.

Das Verfahren zur Herstellung eines Betonverbundes kann in allen gängigen bautechnischen Anwendungen von Beton angewendet werden. Insbesondere ist das Verfahren zum Einsatz im Konstruktionsbau, zur Oberflächenversiegelung, zur Befestigung von Böschungen oder zur Sicherung von Fels oder Gestein geeignet.

Konstruktionsbau umfasst jegliche Art von Bauwerken wie beispielsweise Gebäude, Schächte, Versorgungswege, Brücken, Bodenplatten oder vorzugsweise Tunnel oder Minen. Zur Herstellung von Bauwerken wird der Schalungsbau, der Einsatz von vorgefertigten Bauteilen aus Beton oder vorzugsweise das Spritzbetonverfahren eingesetzt. Vorgefertigte Bauteile werden erhalten, indem wässrige Betonzusammensetzungen in Formen gegeben werden, die nach Abbinden der wässrigen Betonzusammensetzungen entfernt werden.

Zur Herstellung des Betonverbundes nach dem Spritzbetonverfahren werden die wässrigen Betonzusammensetzungen vorzugsweise direkt auf den gegebenenfalls mit Stahl bewehrten Untergrund aufgetragen werden. Die aufgetragene Schichtdicke beträgt üblicherweise zwischen 10 bis 40 cm. Insbesondere bei der Herstellung von dickeren Betonschichten ist es vorteilhaft, die wässrigen Betonzusammensetzungen in mehreren Auftragsschichten mit jeweils geringerer Betonschichtdicke übereinander aufzutragen. Ebenso bevorzugt kann ein Betonverbund auch hergestellt werden, indem der verbleibende Raum zwischen einem Untergrund und einem vorgefertigten Bauteil mit wässrigen Betonzusammensetzungen verfüllt wird, wobei zur Erhöhung der Stabilität des Verbundes gegebenenfalls Stahlbewehrungen eingebaut werden.

In einem weiteren bevorzugten Verfahren zur Herstellung eines Betonverbundes werden zwischen einem Bauteil und einer Schicht einer wässrigen Betonszusammensetzung oder zwischen zwei Schichten wässriger Betonzusammensetzungen, die jeweils unabhängig voneinander gegebenenfalls mit Stahl bewährt sind, wasserundurchlässige Folien oder wasserundurchlässige Membrane eingebaut.

Die folgenden Beispiele dienen der detaillierten Erläuterung der Erfindung und sind in keiner Weise als Einschränkung zu verstehen.

Herstellung der wässrigen Zubereitungen der polymermodifizierten Abbindebeschleuniger:

### Beispiel 1:

Die wässrigen Zubereitungen der polymermodifizierten Abbindebeschleuniger wurden hergestellt, indem eine wässrige Dispersion von Aluminiumsulfat (FG = 50 %) (BE) unter Normalbedingungen nach DIN50014 und unter Rühren mit einem Ultratorax Rührer in eine wässrige Dispersion des kationischen Polymerisats (FG = 50 %) (KatPol) in den in Tabelle 1 angegebenen Verhältnissen a bis e) eingetragen und für 5,0 min gerührt wurde.

Als wässrige Dispersion des kationischen Polymerisats diente hierbei eine in Gegenwart von 10 Gew.-% Polytrimethylammoniumpropyl-methacrylamid-chlorid, bezogen auf die Masse der eingesetzten Vinylacetat- und Ethylen-Monomere, hergestellte Vinylacetat-Ethylen-Copolymerdispersion mit einem Feststoffgehalt von 50 Gew.-% und einer Tg von -5°C.

### Vergleichsbeispiel 1 (VBsp. 1) :

Im Unterschied zu Beispiel 1 wurde an Stelle der wässrigen Dispersion des kationischen Polymerisats eine wässrige Polymerdispersion eines polyvinylalkoholstabilisierten Vinylacetat-Ethylen-Copolymerisats mit einer Tg von - 7°C (FG = 50 %) (VPoI) eingesetzt.

**Tabelle 1: Ausprüfung der Lagerstabilität:**

| | Beispiel 1 | | | | | VBsp. 1 |
|---|---|---|---|---|---|---|
| | a | b | c | d | e | |
| Volumenprozent von KatPoI [%] | 70 | 60 | 50 | 40 | 30 | - |
| Volumenprozent von VPoI [%] | - | - | - | - | - | 50 |
| Volumenprozent von BE [%] | 30 | 40 | 50 | 60 | 70 | 50 |
| Lagerstabilität nach 1 Stunde | A | A | A | A | A | C |
| Lagerstabilität nach 1 Tag | A | A | A | A | A | C |
| Lagerstabilität nach 28 Tagen | A | A | A | A | A | C |

Die Ausprüfung der Lagerstabilität der wässrigen Zubereitungen der polymermodifizierten Abbindebeschleuniger erfolgte visuell nach folgender Bewertungsskala:
A = stabile Dispersion; keinerlei Eindicken oder Koagulieren
B = Eindicken und Koagulieren
C = spontanes und vollständiges Eindicken und Koagulieren beim Herstellen der wässrigen Zubereitungen der polymermodifizierten Abbindebeschleuniger

Aus der Tabelle 1 geht hervor, dass die erfindungsgemäßen wässrigen Zubereitungen der polymermodifizierten Abbindebeschleuniger (Beispiel 1) unabhängig von ihrer Zusammensetzung über den gesamten Beobachtungszeitraum hinweg konstant stabil sind und kein Koagulation oder Ausfällung auftritt. Dahingegen koagulierte die in Vergleichsbeispiel 1 untersuchte Zusammensetzung unmittelbar auf Zugabe des Abbindebeschleunigers zur Polymerdispersion, so dass eine eingedickte Masse mit quarkartiger Konsistenz entstand.

### Herstellung von wässrigen Betonzusammensetzungen:

### Beispiel 2:

Wasser, Sand, Kies und Portlandzement CEM I 42,5 wurden in den im folgenden aufgelisteten Mengen in einem 100 1 Betonmischer (Zyklos Z 75 Gleichlaufzwangsmischer) durch 2 minütiges Rühren gleichmäßig gemischt. Nach 8 minütigem Stehenlassen wurde die Mischung nochmals für 1 min gerührt und währenddessen mit der angegebenen Menge an Melaminsulfonat-Formaldehyd-Kondensat versetzt.

Der wässrigen Zubereitungen der polymermodifizierten Abbindebeschleuniger wurde hergestellt, indem eine wässrige Dispersion von Aluminiumsulfat in das in Wasser dispergierte, kationische Polymerisat in den folgenden angegebenen Mengen unter Rühren mit einem Ultratorax Rührer und bei Normalbedingungen nach DIN50014 eingetragen und für 5 min. gerührt wurde.

Die wässrige Betonzusammensetzung wurde hergestellt, indem die wässrige Zubereitung des polymermodifizierten Abbindebeschleunigers unter Anwendung der Nassspritztechnologie in der Spritzdüse (Nassspritzdüse NW 50 der Firma Mayco) der Nassbetonmischung zugemischt wurde. Die wässrige Betonzusammensetzung wurde unter Normalbedingungen mit der Spritzdüse in eine Schalung (Länge/Höhe/Breite = 70 cm/40 cm/70 cm) gegossen. Nach 24h Lagerung unter Normalbedingungen nach DIN50014 wurden zylindrische Bohrkerne mit einer Grundfläche von 200 mm und einer Höhe von 100 mm gezogen und entsprechend der Prüfdauer nach DIN EN 196 gelagert. Anschließend wurden die Bohrkern der anwendungstechnischen Ausprüfung unterzogen.

Nassbetonmischung:

| | |
|---|---|
| 962 kg | Sand (bis 4,0 mm Korndurchmesser) |
| 643 kg | Kies (4,0 bis 8,0 mm Korndurchmesser) |
| 450 kg | Portlandzement CEM I 42,5 |
| 0,23 kg | Melaminsulfonat-Formaldehyd-Kondensat (Fließmittel) (Sika Addiment FM/F der Firma Sika) |
| 136 kg | Wasser |

Wässrige Zubereitung des polymermodifizierten Abbindebeschleunigers:

| | |
|---|---|
| 45 kg | wässrige Dispersion von Aluminiumsulfat (FG = 50) |
| 45 kg | des in Wasser dispergierten, kationisch stabilisierten Polymerisats aus Beispiel 1 (FG = 50) |

### Vergleichsbeispiel 2 (VBsp. 2):

Im Unterschied zu Beispiel 2 wurde die Nassbetonmischung mit 146 kg Wasser angemacht. An Stelle der wässrigen Zubereitung des polymermodifizierten Abbindebeschleunigers aus Beispiel 2 wurden 45 kg einer wässrigen Dispersion (FG = 50 %) eines polyvinylalkoholstabilisierten Vinylacetat-Ethylen-Copolymerisats mit einer Tg von -7°C und 45 kg einer wässrigen Dispersion (FG = 50 %) von Aluminiumsulfat eingesetzt.

### Vergleichsbeispiel 3 (VBsp. 3):

Im Unterschied zu Beispiel 2 wurde die Nassbetonmischung mit 156 kg Wasser angemacht. Es wurde kein in Wasser dispergiertes, kationisch stabilisiertes Polymerisat eingesetzt.

### Anwendungstechnische Ausprüfung:

### Druckfestigkeit abgebundener wässriger Betonzusammensetzungen:

Die Bohrkerne aus Beispiel 2 sowie den Vergleichsbeispielen 2 und 3 wurden gemäß DIN EN 196 auf ihre Druckfestigkeit hin ausgeprüft.

**Tabelle 2: Untersuchung der Druckfestigkeit abgebundener wässriger Betonzusammensetzungen:**

| | Druckfestigkeiten der Bohrkerne [N/mm²] | | |
|---|---|---|---|
| Alter der Bohrkerne [Tage] | Beispiel 2 | VBsp. 2 | VBsp. 3 |
| 1 | 19,5 | 11,8 | 11,8 |
| 3 | 30,2 | 29,5 | 24,7 |
| 7 | 43,9 | 39,7 | 36,8 |
| 28 | 55,6 | 54,3 | 49,0 |
| 56 | 58,5 | 56,2 | 52,8 |

Die wässrigen Zubereitungen der polymermodifizierten Abbindebeschleuniger bewirken eine Erhöhung der Druckfestigkeiten abgebundener, wässriger Betonmassen (Beispiel 2) gegenüber herkömmlichen abgebundenen Betonmassen (Vergleichsbeispiele 2 und 3). Insbesondere weisen erfindungsgemäße, abgebundene, wässrige Betonmassen eine erhöhte Frühfestigkeit auf.

## Patentansprüche

1. Wässrige Zubereitungen polymermodifizierter Abbindebeschleuniger, **dadurch gekennzeichnet, dass**
ein oder mehrere Abbindebeschleuniger ausgewählt aus der Gruppe umfassend Aluminiumverbindungen, Silikate, Alkalihydroxide und Alkalicarbonate und
ein oder mehrere kationisch stabilisierte Polymerisate, die ein oder mehrere Polymerisate auf Basis ethylenisch ungesättigter Monomere und ein oder mehrere Polymere mit kationischer Ladung als kationische Schutzkolloide enthalten, enthalten sind.

2. Wässrige Zubereitungen der polymermodifizierten Abbindebeschleuniger nach Anspruch 1, **dadurch gekennzeichnet, dass** ein oder mehrere Abbindebeschleuniger ausgewählt werden aus der Gruppe umfassend Aluminiumsalze, Aluminate, Alkalisilikate, Alkalicarbonate und Kaliumhydroxid.

3. Wässrige Zubereitungen der polymermodifizierten Abbindebeschleuniger nach Anspruch 1 oder 2, **dadurch gekennzeichnet, dass** ein oder mehrere Polymere mit kationischer Ladung kationische Monomereinheiten mit quarternären Ammoniumgruppen, Sulfoniumgruppen oder Phosphoniumgruppen enthalten.

4. Wässrige Zubereitungen der polymermodifizierten Abbindebeschleuniger nach Anspruch 1 bis 3, **dadurch gekennzeichnet, dass** ein oder mehrere Polymere mit kationischer Ladung Homo- oder Mischpolymerisate sind von einem oder mehreren kationischen Monomeren aus der Gruppe umfassend Diallyldimethylammoniumchlorid (DADMAC), Diallyldiethylammoniumchlorid (DADEAC), (3-Methacryloxy)propyltrimethylammoniumchlorid (MPTAC), 3-Methacryloxy)ethyltrimethylammoniumchlorid (METAC), (3-Methacrylamido)propyltrimethylammoniumchlorid (MAPTAC), 2-Dimethylaminoethylmethacrylat oder 3-Dimethylaminopropylmethacrylamid (DMAEMA oder DMAPMA bei pH ≤ 5 protonierte Spezies).

5. Wässrige Zubereitungen der polymermodifizierten Abbindebeschleuniger nach Anspruch 1 bis 4, **dadurch gekennzeichnet, dass** ein oder mehrere Polymere mit kationischer Ladung 20 bis 100 Gew.-% kationische Monomereinheiten enthalten, bezogen auf das Gesamtgewicht der Polymere mit kationischer Ladung.

6. Wässrige Zubereitungen der polymermodifizierten Abbindebeschleuniger nach Anspruch 1 bis 5, **dadurch gekennzeichnet, dass** die ethylenisch ungesättigten Monomere der Polymerisate auf Basis ethylenisch ungesättigter Monomere ausgewählt werden aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide.

7. Wässrige Zubereitungen der polymermodifizierten Abbindebeschleuniger nach Anspruch 1 bis 6, **dadurch gekennzeichnet, dass** ein oder mehrere Polymerisate auf Basis ethylenisch ungesättigter Monomere Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate oder Styrol-1,3-Butadien-Copolymerisate sind.

8. Verfahren zur Herstellung der wässrigen Zubereitungen der polymermodifizierten Abbindebeschleuniger nach Anspruch 1 bis 7, **dadurch gekennzeichnet, dass**
ein oder mehrere Abbindebeschleuniger ausgewählt aus der Gruppe umfassend Aluminiumverbindungen, Silikate, Alkalihydroxide und Alkalicarbonate und
ein oder mehrere kationisch stabilisierte Polymerisate, die ein oder mehrere Polymerisate auf Basis ethylenisch ungesättigter Monomere und ein oder mehrere Polymere mit kationischer Ladung als kationische Schutzkolloide enthalten,
in Gegenwart von Wasser gemischt werden.

9. Verwendung der wässrigen Zubereitungen der polymermodifizierten Abbindebeschleuniger nach Anspruch 1 bis 7 in hydraulisch abbindenden Systemen.

10. Wässrige Betonzusammensetzungen enthaltend Zement, Füllstoffe sowie gegebenenfalls weitere Zusatzmittel oder Additive, **dadurch gekennzeichnet, dass** mindestens eine wässrige Zubereitung polymermodifizierter Abbindebeschleuniger enthaltend
ein oder mehrere Abbindebeschleuniger ausgewählt aus der Gruppe umfassend Aluminiumverbindungen, Alkalisilikate, Alkalihydroxide und Alkalicarbonate und
ein oder mehrere kationisch stabilisierte Polymerisate, die ein oder mehrere Polymerisate auf Basis ethylenisch ungesättigter Monomere und ein oder mehrere Polymere mit kationischer Ladung als kationische Schutzkolloide enthalten, enthalten ist.

11. Verfahren zur Herstellung der wässrigen Betonzusammensetzung nach Anspruch 10 durch Mischen von Zement, Füllstoffen und gegebenenfalls weiteren Zusatzmitteln oder Additiven, **dadurch gekennzeichnet, dass** mindestens eine wässrige Zubereitung der polymermodifizierten Abbindebeschleuniger aus Anspruch 10 zugesetzt wird.

12. Verfahren zur Herstellung eines Betonverbundes, **dadurch gekennzeichnet, dass** eine oder mehrere Schichten der wässrigen Betonzusammensetzungen gemäß Anspruch 10 übereinander aufgebracht werden, wobei gegebenenfalls zwischen oder in den Schichten Bauelemente eingebaut werden.

13. Verfahren zur Herstellung eines Betonverbundes nach Anspruch 12, **dadurch gekennzeichnet, dass** der Raum zwischen dem Untergrund und einem Bauteil mit wässrigen Betonzusammensetzungen gemäß Anspruch 10 verfüllt wird.

14. Verfahren zur Herstellung eines Betonverbundes nach Anspruch 12 oder 13, dass zwischen einem Bauteil und einer Schicht einer wässrigen Betonszusammensetzung gemäß Anspruch 10 oder zwischen zwei Schichten wässriger Betonzusammensetzungen gemäß Anspruch 10 wasserundurchlässige Folien oder wasserundurchlässige Membrane eingebaut werden.

15. Verwendung des Verfahrens zur Herstellung eines Betonverbundes nach Anspruch 12 bis 14 zur Befestigung von Böschungen, Fels oder Gestein oder zur der Errichtung von Minen, Tunnel, Gebäuden, Schächten, Versorgungswegen, Brücken oder Bodenplatten oder zur Oberflächenversiegelung.

## Claims

1. Aqueous preparations of polymer-modified setting accelerators, **characterized in that** one or more setting accelerators selected from the group consisting of aluminium compounds, silicates, alkali metal hydroxides and alkali metal carbonates and one or more cationically stabilized polymers which contain one or more polymers based on ethylenically unsaturated monomers and one or more polymers having a cationic charge as cationic protective colloids are present.

2. Aqueous preparations of the polymer-modified setting accelerators according to Claim 1, **characterized in that** one or more setting accelerators are selected from the group consisting of aluminium salts, aluminates, alkali metal silicates, alkali metal carbonates and potassium hydroxide.

3. Aqueous preparations of the polymer-modified setting accelerators according to Claim 1 or 2, **characterized in that** one or more polymers having a cationic charge contain cationic monomer units having quaternary ammonium groups, sulphonium groups or phosphonium groups.

4. Aqueous preparations of the polymer-modified setting accelerators according to any of Claims 1 to 3, **characterized in that** one or more polymers having a cationic charge are homopolymers or copolymers of one or more cationic monomers selected from the group consisting of diallyldimethylammonium chloride (DADMAC), diallyldiethylammonium chloride (DADEAC), (3-methacryloxy)propyltrimethylammonium chloride (MPTAC), (3-methacryloxy)ethyltrimethylammonium chloride (METAC), (3-methacrylamido)propyltrimethylammonium chloride (MAPTAC), 2-dimethylaminoethyl methacrylate and 3-dimethylaminopropylmethacrylamide (DMAEMA and DMAPMA, protonated species at pH ≤ 5).

5. Aqueous preparations of the polymer-modified setting accelerators according to any of Claims 1 to 4, **characterized in that** one or more polymers having a cationic charge contain from 20 to 100% by weight of cationic monomer units, based on the total weight of the polymers having a cationic charge.

6. Aqueous preparations of the polymer-modified setting accelerators according to any of Claims 1 to 5, **characterized in that** the ethylenically unsaturated monomers of the polymers based on ethylenically unsaturated monomers are selected from the group consisting of vinyl esters of unbranched or branched alkylcarboxylic acids having from 1 to 15 carbon atoms, methacrylic esters and acrylic esters of alcohols having from 1 to 15 carbon atoms, vinylaromatics, olefins, dienes and vinyl halides.

7. Aqueous preparations of the polymer-modified setting accelerators according to any of Claims 1 to 6, **characterized in that** one or more polymers based on ethylenically unsaturated monomers are vinyl acetate homopolymers, copolymers of vinyl acetate with ethylene, copolymers of vinyl acetate with ethylene and one or more further vinyl esters, copolymers of vinyl acetate with ethylene and acrylic esters, copolymers of vinyl acetate with ethylene and vinyl chloride, styrene-acrylic ester copolymers and styrene-1,3-butadiene copolymers.

8. Process for producing the aqueous preparations of the polymer-modified setting accelerators according to any of Claims 1 to 7, **characterized in that** one or more setting accelerators selected from the group consisting of aluminium compounds, silicates, alkali metal hydroxides and alkali metal carbonates and
one or more cationically stabilized polymers which contain one or more polymers based on ethylenically unsaturated monomers and one or more polymers having a cationic charge as cationic protective colloids
are mixed in the presence of water.

9. Use of the aqueous preparations of the polymer-modified setting accelerators according to any of Claims 1 to 7 in hydraulically setting systems.

10. Aqueous concrete compositions comprising cement, fillers and, if appropriate, further auxiliaries or additives, **characterized in that** at least one aqueous preparation of polymer-modified setting accelerators comprising
one or more setting accelerators selected from the group consisting of aluminium compounds, alkali metal silicates, alkali metal hydroxides and alkali metal carbonates and one or more cationically stabilized polymers which contain one or more polymers based on ethylenically unsaturated monomers and one or more polymers having a cationic charge as cationic protective colloids is present.

11. Process for producing the aqueous concrete composition according to Claim 10 by mixing of cement, fillers and, if appropriate, further auxiliaries or additives, **characterized in that** at least one aqueous preparation of the polymer-modified setting accelerators from Claim 1 is added.

12. Process for producing a concrete composite, **characterized in that** one or more layers of the aqueous concrete compositions according to Claim 10 are applied on top of one another, with components being able, if appropriate, to be installed between or in the layers.

13. Process for producing a concrete composite according to Claim 12, **characterized in that** the space between the substrate and a component is filled with aqueous concrete compositions according to Claim 10.

14. Process for producing a concrete composite according to Claim 12 or 13, **characterized in that** water-impermeable films or water-impermeable membranes are installed between a component and a layer of an aqueous concrete composition according to Claim 10 or between two layers of aqueous concrete compositions according to Claim 10.

15. Use of the process for producing a concrete composite according to any of Claims 12 to 14 for strengthening embankments, boulders or rock or for the construction of mines, tunnels, buildings, shafts, supply routes, bridges or floor slabs or for surface sealing.

## Revendications

1. Préparations aqueuses d'accélérateurs de prise modifiés avec des polymères, **caractérisées en ce que** sont contenus un ou plusieurs accélérateurs de prise choisis dans le groupe comprenant des composés d'aluminium, des silicates, des hydroxydes de métaux alcalins et des carbonates de métaux alcalins et
un ou plusieurs polymérisats stabilisés par voie cationique, qui contiennent un ou plusieurs polymérisats à base de monomères à insaturation éthylénique et un ou plusieurs polymères à charge cationique en tant que colloïdes protecteurs cationiques.

2. Préparations aqueuses des accélérateurs de prise modifiés avec des polymères selon la revendication 1, **caractérisées en ce qu'**un ou plusieurs accélérateurs de prise sont choisis dans le groupe comprenant des sels d'aluminium, des aluminates, des silicates de métaux alcalins, des carbonates de métaux alcalins et l'hydroxyde de potassium.

3. Préparations aqueuses des accélérateurs de prise modifiés avec des polymères selon la revendication 1 ou 2, **caractérisées en ce qu'**un ou plusieurs polymères à charge cationique contiennent des motifs monomères cationiques comportant des groupes ammonium, des groupes sulfonium ou des groupes phosphonium quaternaires.

4. Préparations aqueuses des accélérateurs de prise modifiés avec des polymères selon l'une quelconque des revendications 1 à 3, **caractérisées en ce qu'**un ou plusieurs polymères à charge cationique sont des homo- ou copolymérisats d'un ou plusieurs monomères cationiques choisis dans le groupe comprenant le chlorure de diallyldiméthylammonium (DADMAC), le chlorure de diallyldiéthylammonium (DADEAC), le chlorure de (3-méthacryloxy)propyltriméthylammonium (MPTAC), le chlorure de (3-méthacryloxy)-éthyltriméthylammonium (METAC), le chlorure de (3-méthacrylamido)propyltriméthylammonium (MAPTAC), le méthacrylate de 2-diméthylaminoéthyle ou le 3-diméthylaminopropylméthacrylamide (DMAEMA ou DMAPMA, espèce protonée à pH ≤ 5).

5. Préparations aqueuses des accélérateurs de prise modifiés avec des polymères selon l'une quelconque des revendications 1 à 4, **caractérisées en ce qu'**un ou plusieurs polymères à charge cationique contiennent 20 à 100 % en poids de motifs monomères cationiques, par rapport au poids total des polymères à charge cationique.

6. Préparations aqueuses des accélérateurs de prise modifiés avec des polymères selon l'une quelconque des revendications 1 à 5, **caractérisées en ce que** les monomères à insaturation éthylénique des polymérisats à base de monomères à insaturation éthylénique sont choisis dans le groupe comprenant des esters vinyliques d'acides alkylcarboxyliques ramifiés ou non ramifiés ayant de 1 à 15 atomes de carbone, des esters d'acide méthacrylique et des esters d'acide acrylique d'alcools ayant de 1 à 15 atomes de carbone, des composés vinylaromatiques, des oléfines, des diènes et des halogénures de vinyle.

7. Préparations aqueuses des accélérateurs de prise modifiés avec des polymères selon l'une quelconque des revendications 1 à 6, **caractérisées en ce qu'**un ou plusieurs polymérisats à base de monomères à insaturation éthylénique sont des homopolymérisats d'acétate de vinyle, des copolymérisats d'acétate de vinyle avec l'éthylène, des copolymérisats d'acétate de vinyle avec l'éthylène et un ou plusieurs autres esters vinyliques, des copolymérisats d'acétate de vinyle avec l'éthylène et des esters d'acide acrylique, des copolymérisats d'acétate de vinyle avec l'éthylène et le chlorure de vinyle, des copolymérisats styrène/ester d'acide acrylique ou des copolymérisats styrène/1,3-butadiène.

8. Procédé pour la production des préparations aqueuses des accélérateurs de prise modifiés avec des polymères selon l'une quelconque des revendications 1 à 7, **caractérisé en ce qu'**on mélange, en présence d'eau,
un ou plusieurs accélérateurs de prise choisis dans le groupe comprenant des composés d'aluminium, des silicates, des hydroxydes de métaux alcalins et des carbonates de métaux alcalins et
un ou plusieurs polymérisats stabilisés par voie cationique, qui contiennent un ou plusieurs polymérisats à base de monomères à insaturation éthylénique et un ou plusieurs polymères à charge cationique en tant que colloïdes protecteurs cationiques.

9. Utilisation des préparations aqueuses des accélérateurs de prise modifiés avec des polymères selon l'une quelconque des revendications 1 à 7, dans des systèmes à prise hydraulique.

10. Compositions aqueuses de béton, contenant du ciment, des charges ainsi qu'éventuellement d'autres adjuvants ou additifs, **caractérisées en ce qu'**est contenue au moins une préparation aqueuse d'accélérateurs de prise modifiés avec des polymères contenant un ou plusieurs accélérateurs de prise choisis dans le groupe comprenant des composés d'aluminium, des silicates de métaux alcalins, des hydroxydes de métaux alcalins et des carbonates de métaux alcalins et
un ou plusieurs polymérisats stabilisés par voie cationique, qui contiennent un ou plusieurs polymérisats à base de monomères à insaturation éthylénique et un ou plusieurs polymères à charge cationique en tant que colloïdes protecteurs cationiques.

11. Procédé pour la préparation des compositions aqueuses de béton selon la revendication 10, par mélange de ciment, de charges et éventuellement d'autres adjuvants ou additifs, **caractérisé en ce qu'**on ajoute au moins une préparation aqueuse des accélérateurs de prise modifiés avec des polymères de la revendication 10.

12. Procédé pour la production d'un composite de béton, **caractérisé en ce qu'**on applique les unes sur les autres une ou plusieurs couches des compositions aqueuses de béton selon la revendication 10, éventuellement en incorporant des éléments de construction entre ou dans les couches.

13. Procédé pour la production d'un composite de béton selon la revendication 12, **caractérisé en ce qu'**on remplit l'espace entre le support et un élément de construction avec des compositions aqueuses de béton selon la revendication 10.

14. Procédé pour la production d'un composite de béton selon la revendication 12 ou 13, **caractérisé en ce qu'**entre un élément de construction et une couche d'une composition aqueuse de béton selon la revendication 10 ou entre deux couches de compositions aqueuses de béton selon la revendication 10, on incorpore des films imperméables à l'eau ou des membranes imperméables à l'eau.

15. Utilisation du procédé pour la production d'un composite de béton selon l'une quelconque des revendications 12 à 14, pour la consolidation de talus, de rocs ou de roches, ou pour la construction de mines, de tunnels, de bâtiments, de puits, de voies de distribution, de ponts ou de dalles de fondation, ou pour le bouchage de surfaces.
